# EUROPEAN PATENT SPECIFICATION

(11) **EP 3 316 743 B1**
(45) Date of publication and mention of the grant of the patent: **29.09.2021**
(21) Application number: 16733961.3
(22) Date of filing: 01.07.2016
(51) Int. Cl.: A47J 31/36

(54) **COMPACT INTEGRATION OF CAPSULE HANDLING DEVICE**
KOMPAKTE INTEGRATION EINER KAPSELHANDHABUNGSVORRICHTUNG
INTÉGRATION COMPACTE D'UN DISPOSITIF DE MANIPULATION DE CAPSULE

(30) Priority: 02.07.2015 EP 15175091
(43) Date of publication of application: 09.05.2018
(73) Proprietor: Société des Produits Nestlé S.A., 1800 Vevey (CH)
(72) Inventor: CAHEN, Antoine, 1005 Lausanne (CH); GRANGER, Eric, 1005 Lausanne (CH); MAZZA, Pietro, 10131 Torino (CH)
(74) Representative: Schnyder, Frank Simon
(86) International application number: PCT/EP2016/065452
(87) International publication number: WO 2017/001644

(56) References cited:
- EP-A1- 1 767 129
- WO-A1-2013/038318
- WO-A1-2013/119534
- WO-A1-2016/083484
- WO-A2-2009/113035

## Description

### Field of the Invention

The field of the invention pertains to beverage preparation machines provided with a user-handle, e.g. machines using capsules of an ingredient of the beverage to be prepared.

For the purpose of the present description, a "beverage" is meant to include any human-consumable liquid substance, such as tea, coffee, hot or cold chocolate, milk, soup, baby food, etc... A "capsule" is meant to include any pre-portioned beverage ingredient, such as a flavouring ingredient, within an enclosing packaging of any material, in particular an airtight packaging, e.g. plastic, aluminium, recyclable and/or biodegradable packagings, and of any shape and structure, including soft pods or rigid cartridges containing the ingredient. The capsule may contain an amount of ingredient for preparing a single beverage serving or a plurality of beverage servings.

### Background Art

Certain beverage preparation machines use capsules containing ingredients to be extracted or to be dissolved and/or ingredients that are stored and dosed automatically in the machine or else are added at the time of preparation of the drink. Some beverage machines possess filling means that include a pump for liquid, usually water, which pumps the liquid from a source of water that is cold or indeed heated through heating means, e.g. a thermoblock or the like.

Especially in the field of coffee preparation, machines have been widely developed in which a capsule containing beverage ingredients is inserted in a brewing device. The brewing device is tightly closed about the capsule, water is injected at the first face of the capsule, the beverage is produced in the closed volume of the capsule and a brewed beverage can be drained from a second face of the capsule and collected into a receptacle such as a cup or glass.

Brewing devices have been developed to facilitate insertion of a "fresh" capsule and removal of the capsule upon use. Typically, the brewing devices comprise two parts relatively movable from a configuration for inserting/removing a capsule to a configuration for brewing the ingredient in the capsule.

The actuation of the movable part of the brewing device may be motorized. Such a system is for example disclosed in EP 1 767 129. In this case, the user does not have to provide any manual effort to open or close the brewing device. The brewing device has a capsule insertion passage provided with a safety door assembled to the movable part of the brewing device via a switch for detecting an undesired presence of a finger in the passage during closure and prevent injuries by squeezing. Alternative covers for a capsule insertion passage are disclosed WO 2012/093107 and WO 2013/127906.

The actuation of the movable part of the brewing device may be manual.

WO 2009/043630 discloses a beverage preparation machine including a brewing unit having a front part with a passage for inserting a capsule into the brewing unit. An arched handle pivotable above the machine's housing is seizable by the user's hand and configured for driving the brewing unit to form a brewing chamber around the capsule and remove the capsule upon use. U-shaped handles are also disclosed in WO 01/15581, WO 02/43541, WO 2010/015427, WO 2010/128109, WO 2011/144719 and WO 2012/032019.

WO 2005/004683 and WO 2007/135136 disclose a device comprising a frame, a fixed holding part for the capsule, a movable holding part which is mounted relative to the frame in a sliding relationship, one or two knuckle joint mechanisms that provide a mechanical system which enables to close in a steady and fluid-tight manner the holding parts about the capsule while also resisting to the counter-force acting while re-opening and generated by the internal brewing pressure, and a handle for directly levering the knuckle joint mechanism. Such a device forms a simple assembly enabling insertion of the capsule by vertical fall through a passage in the frame and removal of the used capsule in the same direction as the insertion direction. The handle is in the form of a lever that is manually pivotable about an end thereof adjacent the machine's housing. In the closed position, the handle is pivoted down against the machine's housing and over the capsule inlet passage to cover it. In the open position, the handle is pivoted up away from the capsule inlet passage to uncover this passage. Hence, in addition to moving the holding part, the handle serves to cover and uncover the passage for the capsule. Examples of integration of such devices in beverage machines are disclosed in WO 2009/074550, WO2011/144719, EP2014195046, EP2014195048 and EP2014195067.

Various handle configurations for capsule handling devices have been disclosed, e.g. in EP 1867260, WO 2005/004683, WO WO2007/135136, WO 2008/138710, WO 2009/074550, WO 2009/074553, WO 2009/074555, WO 2009/074557, WO 2009/074559, WO 2010/037806, WO 2011/042400, WO 2011/042401 and WO 2011/144720.

WO 2016/083484 A1 discloses a machine with an inclined extraction device, WO 2013/038318 A1, WO 2013/119534 A1, WO 2009/113035 A2 disclose further similar machines.

### Summary of the Invention

The invention relates to a machine for preparing a beverage. The beverage preparation machine can be an in-home or out of home machine. The machine may be for the preparation of coffee, tea, chocolate, cacao, milk, soup, baby food, etc....

The beverage preparation typically includes the mixing of a plurality of beverage ingredients, e.g. water and milk powder, and/or the infusion of a beverage ingredient, such as an infusion of ground coffee or tea with water. One or more of such ingredients may be supplied in loose and/or agglomerate powder form and/or in liquid form, in particular in a concentrate form. A carrier or diluents liquid, e.g. water, may be mixed with such ingredient to form the beverage. Typically, a predetermined amount of beverage is formed and dispensed on user-request, which corresponds to a serving. The volume of such a serving may be in the range of 25 to 200 ml and even up to 300 or 400 ml, e.g. the volume for filling a cup, depending on the type of beverage. Formed and dispensed beverages may be selected from ristrettos, espressos, lungos, cappuccinos, latte macchiato, cafe latte, americano coffees, teas, etc... In particular, a coffee machine may be configured for dispensing espressos, e.g. an adjustable volume of 20 to 60 ml per serving, and/or for dispensing lungos, e.g. a volume in the range of 70 to 150 ml per serving.

The machine has: a housing with an outer face extending along a generally straight axis; and a device for extracting a capsule.

The device includes a user-handle. The user-handle may be in the form of a lever handle, e.g. a plate-like lever bar, for instance as disclosed in WO 2007/135135, WO 2009/074550 or WO 2011/144720. The user-handle may be in the form of a U-shaped handle, e.g. as disclosed in WO 2009/043630 or WO 2011/144719. The user-handle is pivotable between first and second positions about a pivoting axis, e.g. the user-handle being assembled or fixed to or being mounted about a pivoting axle. The pivoting axis (or axle) is located at the outer face, e.g. at the level of the outer face or immediately adjacent to the outer face (e.g. within a distance to the outer face of 0.5, 1, 2 or 3 mm) inside or outside the housing. The user-handle can be pivotable between a first position generally along the outer face and a second position angled relatively to the outer face generally outwardly from the housing. Typically, the user-handle is pivotable from the first position to the second position and vice versa. The handle in the second position can be at an angle in the range of 60 to 120 deg relative to the straight axis, such as 80 to 100 deg e.g. about 90 deg.

The device of the machine includes a capsule holding arrangement having a longitudinal axis and comprising a first part and a second part that are relatively movable generally along the longitudinal axis by pivoting the user-handle. Hence, the first and/or the second part can be movable in the device. By pivoting the user-handle between its first and second positions, such as from the second position into the first position, the first and second parts are relatively moved from:
- an open position in which the first and second parts are distant from each other for inserting the capsule into the device and/or removing the capsule from the device; into
- a closed position in which the first and second parts are promximate to each other to form a seat, e.g. a capsule extraction chamber, for holding the capsule in an extraction position between the first and second parts.

The handle movement can be reversed to relatively move the first and second parts from the closed position into the open position.

The seat may extend along a seat direction that is parallel to or collinear with the longitudinal axis. The seat direction typically constitutes a general direction of extraction of the capsule along the seat.

A flavoured beverage may be prepared by circulating (by means of a liquid driver, e.g. a pump) a carrier liquid, such as water, into the capsule to flavour the liquid by exposure to a flavouring ingredient held in the capsule, e.g. generally along the extraction direction.

When closed capsules of ingredients are used, e.g. flavouring ingredients, the first and second parts may include a capsule opener such as blades and/or a tearing tool, e.g. a plate with a tearing profile, for instance as known from Nespresso™ machines or as disclosed in EP 0 512 470, EP 2 068 684 and WO 2014/076041 and the references cited therein.

The device of the machine has a converter, e.g. a mechanical converter and/or motorized converter, connected to the handle and to at least one part of the first and second parts for converting movements of the handle into corresponding relative movements of the first and second parts.

For instance, the converter includes at least one knuckle-joint arrangement such as a plurality of knuckle joint arrangements, e.g. a plurality of arrangements in a serial configuration. For instance, the knuckle-joint arrangements connecting the user-handle to at least one part of the first and second parts are in a serial configuration. Examples of such converters are disclosed in WO 2005/004683, WO 2007/135135, WO 2007/135136, WO 2011/042401 and WO 2011/144719.

The converter may include one or more gears, such as toothed gears, WO 2007/135135 and WO2007/135136, WO 2011/042400.

The converter can have at least one transmission belt.

The converter may also combine different systems, e.g. gears and knckle joint arrangements, for instance as disclosed in PCT/EP15/057431 and PCT/EP15/057432.

The capsule holding arrangement is at least partly in the housing and adjacent to the outer face. Hence, the capsule holding arrangement can be entirely in the housing or a part of the capsule holding arrangement may extend out from the housing.

The first and second parts can be relatively movable along at least one guide, e.g. a pair of lateral guides, that extends generally along the longitudinal axis or generally in parallel to the longitudinal axis. At least one of the first and the second parts can be provided with one or more guide followers, such as at least one of a roller, a pin, a rod and an axle, e.g. an axle connecting the converter to the first or second part. The guide can include a rail or groove or cam for guiding the guide follower(s) generally along or generally in parallel to the longitudinal axis. The guide(s) is/are typically in contact with the corresponding guide follower (s) during the entire relative movement of the first and second parts from the open to the closed positions and vice versa.

The housing can have a bottom for being placed on a support surface external to such machine, e.g. via one or more machine feet fixed to the bottom, so that the straight axis is generally parallel to the bottom, the outer face forming a machine top face. Such an external surface may be formed by a kitchen table, a cupboard or a shelf.

The capsule holding arrangement may include a frame that is directly or indirectly fixed to the housing. The frame can extend longitudinally along the longitudinal direction. The first and second parts may be associated with the frame so that at least one part of the first and second parts is movable along the frame. The other part of the first and second parts can be fixed to or integral with the frame, or the other part can be movable relative to the frame. The pivoting axis of the user-handle may extend through the frame, e.g. the axle when present being assembled, mounted or fixed to the frame. The converter can be mounted to the frame.

In accordance with the invention, the capsule holding arrangement is tilted relative to the outer face so that the longitudinal axis is angled relative to the straight axis. Thus, a first end of the holding arrangement facing the outer face is at a first distance to the face's straight axis, such as proximate to the outer face, and a second opposite end of the arrangement facing the outer face is at a second distance to the face's straight axis, such as distant to the outer face. The first distance is shorter than the second distance, the first distance being for instance null (the first end being in contact with the outer face).

Hence, with such an integration of an extraction device in a machine having a user-handle pivotably mounted at the machine's housing, the volume occupation in the machine's housing is improved and the machine's housing size can be reduced or the machine's housing may offer improved dimensional housing capacity. This is achieved by inclining the device about the pivoting axis of the handle so that the space between the housing' outer face and the device is reduced on one side of the pivoting axis while the space is increased on the other side of the pivoting axis. It follows that instead of having an average space between the housing's outer face and the device along the device, the space is increased on one side which provides greater dimensional storage flexibility while one the other side, the space is minimised to avoid unused or difficult to use space.

The second end and the straight axis, e.g. the outer face, can delimit a seat in which a machine component, such as an electric component e.g. a control unit or a flowmeter or a pump or a heater or a fluid guide, is housed. For instance, the electric component, e.g. a control unit, is associated with a user-interface such as a user-interface located on the housing or extending beyond the straight axis or adjacent the straight axis outside the housing, e.g. a user-interface that is rigidly fixed to the electric component.

The machine according to the invention includes a removable receptacle, the capsule holding arrangement at the first end being located between the receptacle and the straight axis, such as between the receptacle and the outer face. Hence, by tilting the device away from the receptacle towards the housing's outer face, the dimensions of the receptacle may be correspondingly increased (or the height of the machine's housing correspondingly lowered without affecting the maximum height of a suitable receptacle).

The receptacle is for instance configured for collecting waste material, e.g. used capsules or liquid residues or cleaning fluid from the capsule holding arrangement.

The receptacle may be configured for dispensing an ingredient supply such as capsules or liquid such as water to the capsule holding arrangement.

The holding arrangement according to the invention comprises or is fixed to an outlet at the first end of the arrangement, e.g. an outlet covered by a housing head of the housing. The outlet can be located above a beverage dispensing area configured for receiving a user-recipient, e.g. a user-mug and/or a user-cup, to be filled with beverage dispensed from the outlet. Hence, by tilting the device, an outlet connected to the device can be raised so that higher recipients can be placed under the outlet without having to increase the overall height of the machine, e.g. of the machine's housing (or the height of the machine's housing can be correspondingly lowered without affecting the maximum height of a suitable recipient).

For instance, the dispensing area is associated with a machine recipient support for supporting such recipient under the outlet. The support can be: associated with a drip tray e.g. a drip tray supporting the support; and/or movable relative to the housing vertically under the outlet and/or away from under the outlet for enabling a placement of user-recipients of different heights under the outlet. Examples of suitable recipient supports are disclosed in EP 0 549 887, EP 1 440 639, EP 1 731 065, EP 1 867 260, US 5,161,455, US 5,353,692, WO 2009/074557, WO 2009/074559, WO 2009/135869, WO 2011/154492, WO 2012/007313, WO 2013/186339, EP 2014198712, EP 2014198710 and EP 2014198715.

The longitudinal axis of the capsule holding arrangement can be at an angle relative to the straight axis of the outer face in the range of 2 to 25 deg, such as 3 to 15 deg, e.g. 4 to 10 deg. for instance about 5 or 7 deg.

At least one part of the first and second parts may delimit a cavity for receiving a body of the capsule, such as a tapered cavity, e.g. a conical or pyramidal cavity, or a straight cavity, e.g. a cylindrical or trapezoidal cavity. Such cavity may extend along an axis that is generally collinear with the longitudinal axis when the capsule holding arrangement is in its closed position.

At least one part of the first and second parts may delimit a tapered cavity, e.g. a conical or pyramidal cavity, for receiving a body of the capsule. Such cavity can have a half apex angle that is greater than an angle between the longitudinal axis of the capsule holding arrangement and the straight axis of the outer face.

The tapered cavity's half apex angle can be in the range of 3 to 15 deg, such as 4 to 12 deg, e.g. 5 to 10 deg, for instance about 6 or 7 deg.

The tapered cavity can have an axis upwardly oriented towards the other part of these first and second parts when the first and second parts are in their closed position.

The tapered cavity may be delimited by a lowermost generatrix or lateral surface line that is downwardly oriented towards the other part of these first and second parts.

The other part of these first and second parts may delimit a cavity for receiving the body of the capsule such as a tapered cavity, e.g. a conical or pyramidal cavity, or a straight cavity, e.g. a cylindrical or trapezoidal cavity. The cavity may extend along an axis that is generally collinear with the longitudinal axis when the capsule holding arrangement is in its closed position.

The shape of the body of the capsule can match the shape of the cavity (or of the cavities when both parts delimit each a cavity).

The other part of these first and second parts may include an extraction plate, such as a plate provided with piercing elements for opening a flow-through face of the capsule or a non-intrusive plate for cooperating with a pre-opened or a self-opening flow-through face of the capsule. Self-opening capsules are for instance disclosed in CH 605 293 and WO 03/059778. The opening of capsules by a machine's piercing elements of a plate are for example disclosed in EP 512 470 and EP 2 068 684.

The first and second parts can be relatively movable from their open position to their closed position and vice versa along a motion path that generally follows the longitudinal axis.

The motion path may follow strictly the longitudinal axis or may depart from the longitudinal axis by a distance of less than 15%, such as less than 10% or 5%, of a closure distance separating the open and the closed positions. Such a departure may be provided for improving the handling, e.g. to increase the reliability of the handling, of the capsule by the first and second parts.

The first and second parts can be only relatively translatable along the motion path, e.g. a pivoting-free relative translation of the first and second parts.

The first and second parts may be relatively translatable and relatively pivotable by a pivoting angle of less than 30 deg, such as less than 20 deg, e.g. less than 15, 10 or 5 deg.

Such a pivoting may be provided for improving the evacuation of residual liquid from the first and/or second parts.

Such a pivoting may be provided for improving the handling, e.g. to increase the reliability of the handling, of the capsule by the first and second parts.

For instance, one part of the first and second parts delimits a cavity with a cavity opening for receiving a body of the capsule and the cavity opening being pivoted downwards in the open position for:
- allowing or facilitating evacuation of the capsule body and/or residual liquid out of the cavity by gravity; and/or
- avoiding jamming of the capsule between the first and second parts upon removal of the capsule body out of the cavity e.g. by retaining the capsule, typically by retaining a capsule flange or edge of the capsule, at the other part of the first and second parts when the first and second parts are relatively moved into their open position.

The machine may include a fluid circuit connecting the capsule holding arrangement, e.g. at least one part of the first and second parts, to a source of liquid, e.g. water, such as a liquid reservoir connected to the fluid circuit by a reservoir outlet. For instance, the fluid circuit comprises at least one device selected from: a pump, e.g. a solenoid pump (reciprocating piston pump) or a peristaltic pump or a diaphragm pump; a thermal conditioner, e.g. a heater and/or a cooler, such as a batch heater e.g. a boiler or a continuous heater such as thermoblock; and a sensor such as a temperature sensor, e.g. a temperature sensor integrated in or separate from a thermal conditioner, or a pressure sensor, e.g. a pressure sensor downstream a pump, or a flow meter, e.g. a flowmeter upstream a pump. Such device is for instance controlled and/or powered via a control unit, e.g. a control unit in a seat as described above, the control unit typically controlling and/or powering such device(s) for preparing the beverage.

The thermal conditioner may be a boiler or a thermoblock or an on demand heater (ODH), for instance an ODH type disclosed in EP 1 253 844, EP 1 380 243 and EP 1 809 151.

Examples of pumps and their incorporation into beverage machines are disclosed in WO 2009/150030, WO 2010/108700, WO 2011/107574 and WO 2013/098173.

The capsule holding arrangement in the open position and optionally the outer face may delimit a capsule insertion channel, such as a channel fitted with one or more insertion guides for guiding a capsule flange or edge of the capsule to inbetween the first and second parts in the open position. The capsule insertion channel, e.g. the insertion guide when present, may extend along an insertion axis that is generally orthogonal to the longitudinal axis, the insertion axis and the longitudinal axis being for instance at a relative angle in the range of 70 to 110 deg such as 80 to 100 deg, e.g. 85 to 95 deg, typically about 90 deg.

The capsule insertion channel may have a shape that generally fits the shape of the capsule or a part of the capsule.

The interaction between the first and second parts (and optionally the insertion channel) and the capsule may be of the type disclosed in WO 2005/004683, WO 2007/135135, WO2007/135136 and WO 2008/037642.

The invention also relates to a combination of a machine as described above and a capsule. The capsule is held in the capsule holding arrangement between the first and second parts in the closed position and extends along the longitudinal axis.

Another aspect of the invention relates to a method of preparing a beverage in a machine as described above. The method comprises the steps of:
- actuating the user-handle to pivot the handle about the axis that is located at the outer face of the housing between the first and second positions to relative move, generally along the longitudinal axis at an angle relative to the straight axis of the outer face, the first and second parts into the open position;
- inserting a capsule inbetween the first and second parts in the open position, e.g. via the above described capsule insertion channel;
- actuating the user-handle to pivot the handle about the axis between the first and second positions to relatively move, generally along the longitudinal axis, the first and second parts into the closed position to secure the capsule in an extraction configuration;
- extracting the capsule to form the beverage, e.g. by activating the device(s) of the above described fluid circuit, optionally the beverage being dispensed via the above described outlet to a user-recipient; and
- actuating the user-handle to pivot the handle about the axis that is located at the outer face of the housing between the first and second positions to relative move, generally along the longitudinal axis at an angle relative to the straight axis of the outer face, the first and second parts into the open position to remove the capsule from inbetween the first and second parts, e.g. remove the capsule by gravity, the capsule being for instance removed, e.g. by gravity, via an evacuation passage typically to a receptacle for collecting waste material.

A further aspect of the invention relates to a use of a capsule as a capsule for:
- a machine as described above,
- implementing a combination as described above, or
- carrying out a method as described above.

The capsule may comprise a body, e.g. a generally straight or tapered body. For instance, the capsule has a circular peripheral annulus flange, e.g. a flexible or rigid flange, extending from a capsule part, e.g. an edge or face, of the body. Optionally, the capsule contains a flavoring ingredient for preparing tea, coffee, hot chocolate, cold chocolate, milk, soup or baby food.

The capsule can be made of an aluminium or plastic or paper enclosure containing the ingredient.

Such capsule can have a generally cup-shaped body, e.g. a generally cylindrical or frusto-conical or domical body, with a flange to which a lid is sealed for enclosing the ingredient.

### Brief Description of the Drawings

The invention will now be described with reference to the schematic drawings, wherein:
- Figures 1 and 2 illustrate a device including a capsule holding arrangement in an open position of a machine according to the invention;
- Figures 3 and 4 illustrate the device of Figs 1 and 2 with the capsule holding arrangement in a closed position;
- Figure 5 illustrates the integration of the device of Figs 1 to 4 in the machine when the capsule holding arrangement is in the open position; and
- Figure 6 illustrates the integration of the device of Figs 1 to 4 in the machine when the capsule holding arrangement is in the closed position; and

### Detailed description

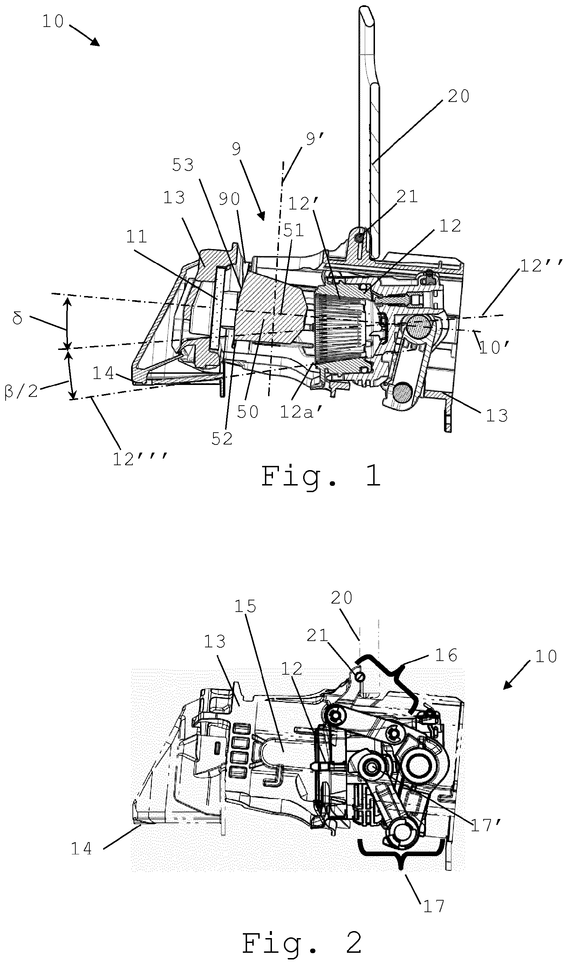

Figures 1 to 6 illustrate an exemplary embodiment of a machine 1 in accordance with the invention. The ingredient may be supplied in the form of an ingredient capsule 50, e.g. of the type described above under the header "field of the invention".

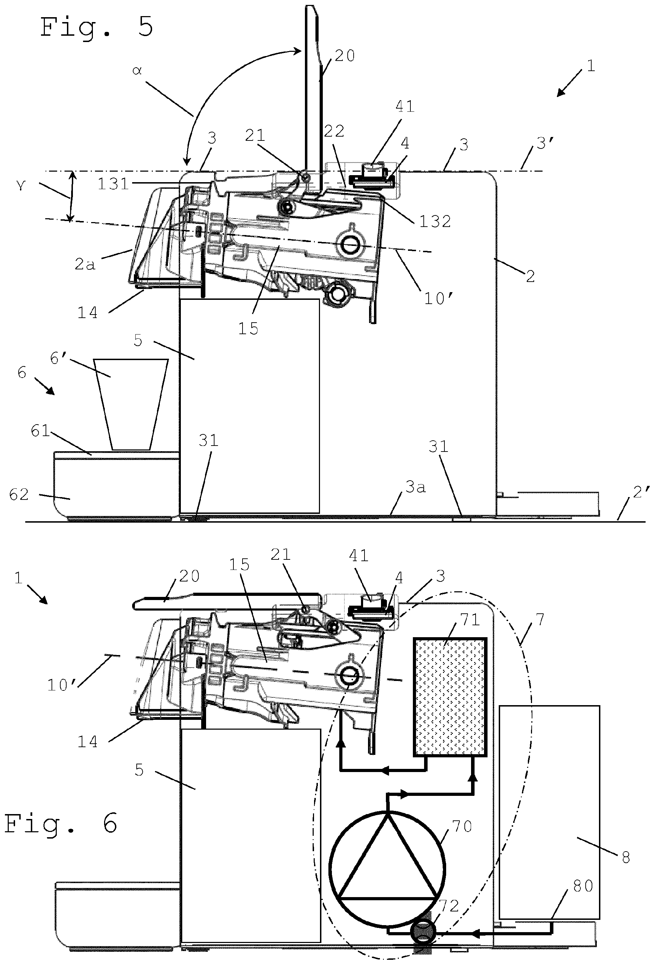

As apparent in Figs 5 and 6, beverage preparation machine 1 has a housing 2 with an outer face 3 extending along a generally straight axis 3' and a device 10 for extracting capsule 50.

Device 10 includes a user-handle 20, such as a lever handle e.g. a plate-like lever bar or a U-shaped handle.

Handle 20 is pivotable between first and second positions about pivoting axis 21. For instance, user-handle 20 is assembled or fixed to or is mounted about a pivoting axle 21. Pivoting axis (or axle) 21 is located at outer face 3. User-handle 20 can be pivotable between a first position generally along outer face 3 and a second position angled relative to outer face 3 generally outwardly from housing 2. Handle 20 in the second position can be at an angle α in the range of 60 to 120 deg relative to straight axis 3', such as 80 to 100 deg e.g. 90 deg.

As apparent in Figs 1, 3, 5 & 6, device 10 includes a capsule holding arrangement 11,12,13 having a longitudinal axis 10' and comprising a first part 11 and a second part 12 that are relatively movable generally along the longitudinal axis 10'. By pivoting user-handle 20 between its first and second positions such as from the first into the second position, first and second parts 11,12 are relatively moved from:
- an open position in which first and second parts 11,12 are distant from each other for inserting capsule 50 into device 10 and/or removing capsule 50 from device 10; into
- a closed position in which first and second parts 11,12 are promximate to each other to form a seat 12a, e.g. a capsule extraction chamber, for holding capsule 50 in an extraction position between first and second parts 11,12.

Seat 12a may extend along a seat direction 12" that is parallel to or collinear with longitudinal axis 10'. Seat direction 12" typically constitutes a general extraction direction along seat 12a.

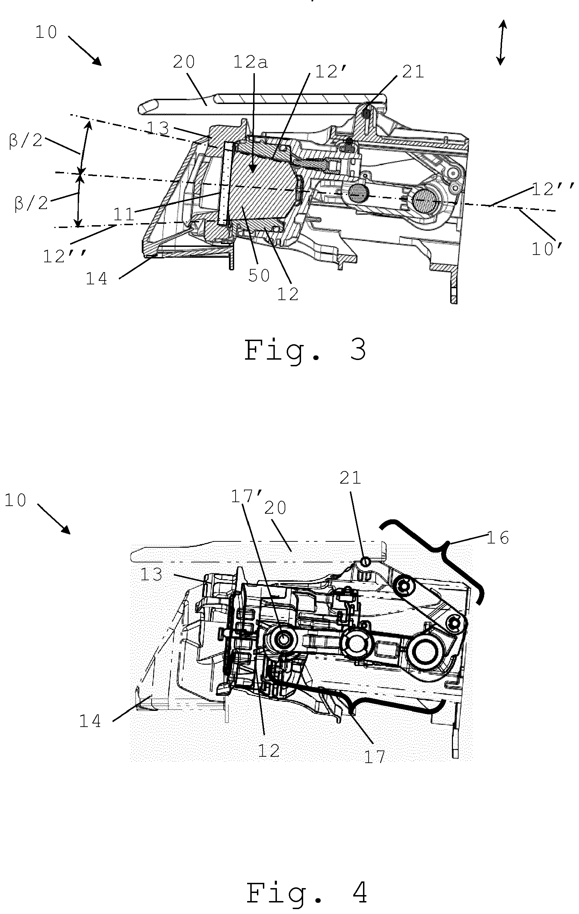

As apparent in Figs 2 and 4, device 10 includes a converter 16,17, e.g. a mechanical converter (which could be replaced by or associated with a motorized converter), connected to handle 20 and to at least one part 12 of first and second parts 11,12 for converting movements of handle 20 into corresponding relative movements of first and second parts 11,12.

Converter 16,17 may include one or more mechanical transmission elements selected from:
- at least one knuckle-joint arrangement 16,17 such as a plurality of knuckle joint arrangements 16,17, e.g. a plurality of arrangements in a serial configuration, optionally knuckle-joint arrangements 16,17 connecting user-handle 20 to at least one part 12 of first and second parts 11,12 in a serial configuration;
- one or more gears, such as toothed gears; and
- at least one transmission belt.

Capsule holding arrangement 11,12,13 can be at least partly in housing 2 and adjacent to outer face 3.

First and second parts 11,12 can be relatively movable along at least one guide 15, e.g. a pair of lateral guides 15, that extends generally along longitudinal axis 10' or generally in parallel to longitudinal axis 10'. At least one of first and second parts 11,12 can be provided with one or more guide followers 17', such as at least one of a roller, a pin, a rod and an axle 17', e.g. an axle 17' connecting first or second part 11,12 ot converter 16,17. Guide 15 can include a rail or groove or cam 15 for guiding guide follower(s) 17' generally along or generally in parallel to longitudinal axis 10'.

Housing 2 may have a bottom 3a for being placed on a support surface 2' external to such machine 1, e.g. via one or more machine feet 31 fixed to bottom 3a, so that straight axis 3' is generally parallel to bottom 3a, outer face 3 forming a machine top face.

Capsule holding arrangement 11,12,13 may include a frame 13 that is directly or indirectly fixed to housing 2, such as a frame 13 that extends longitudinally along longitudinal direction 10'. First and second parts 11,12 can be associated with frame 13 so that at least one of first and second parts 11,12 is movable along frame 13.

The other part 11 of first and second parts 11,12 can be being fixed to or integral with frame 13, or the other part 11 may be movable relative to frame 13.

Pivoting axis 21 of user-handle 20 may extend through frame 13, e.g. axle 21 when present being mounted, assembled or fixed to frame 13.

Converter 16,17 may be mounted to frame 13.

Capsule holding arrangement 11,12,13 is tilted relative to outer face 3 so that longitudinal axis 10' is angled relative to straight axis 3' whereby a first end 131 of arrangement 11,12,13 facing outer face 3 is at a first distance to the face's straight axis 3', such as proximate to the outer face 3, and a second opposite end 132 of arrangement 11,12,13 facing outer face 3 is at a second distance to the face's straight axis 3', such as distant to outer face 3. The first distance is shorter than the second distance.

Second end 132 and straight axis 3', e.g. outer face 3, may delimit a seat 22 in which a machine component, such as an electric component 4 e.g. a control unit or a flowmeter or a pump or a heater or a fluid guide, is housed. For instance, electric component 4, e.g. a control unit, is associated with a user-interface 41 such as a user-interface located on housing 2 or extending beyond straight axis 3' or adjacent straight axis 3' outside housing 2. User-interface 41 can be rigidly fixed to component 4.

As illustrated in Figs 5 and 6, machine 1 can include a removable receptacle 5. Capsule holding arrangement 11,12,13 at first end 131 may be located between receptacle 5 and straight axis 3', such as between receptacle 5 and outer face 3. Receptacle 5 can be configured for: collecting waste material, e.g. used capsules 50 or liquid residues or cleaning fluid from capsule holding arrangement 11,12,13; or dispensing an ingredient supply such as capsules or liquid such as water to the capsule holding arrangement.

Holding arrangement 11,12,13 may comprise or may be fixed to an outlet 14 at first end 131 of arrangement 11,12,13. For instance, outlet 14 is covered by a housing head 2a of housing 2.

Outlet 14 can be located above a beverage dispensing area 6 configured for receiving a user-recipient 6', e.g. a user-mug and/or a user-cup, to be filled with beverage dispensed from outlet 14. Dispensing area 6 can be associated with a machine recipient support 61 for supporting recipient 6' under outlet 14, such as a support 61 that is:
- associated with a drip tray 62 e.g. a drip tray supporting support 61; and/or
- movable relative to housing 2 vertically under the outlet and/or away from under outlet 14 for enabling a placement of user-recipients 6' of different heights under outlet 14.

Longitudinal axis 10' of capsule holding arrangement 11,12,13 can be at an angle γ relative to the straight axis 3' of outer face 3 in the range of 2 to 25 deg, such as 3 to 15 deg, e.g. 4 to 10 deg. for instance about 5 or 7 deg.

At least one part 12 of first and second parts 11,12 can delimit a cavity 12' for receiving a body 51 of capsule 50, such as a tapered cavity, e.g. a conical or pyramidal cavity, or a straight cavity, e.g. a cylindrical or trapezoidal cavity. Cavity 12' can extend along an axis 12" that is generally collinear with longitudinal axis 10' when capsule holding arrangement 11,12,13 is in its closed position.

At least one part 12 of first and second parts 11,12 may delimit a tapered cavity 12', e.g. a conical or pyramidal cavity, for receiving a body 51 of capsule 50, cavity 12' having a half apex angle β/2 that is greater than an angle γ between longitudinal axis 10' of the capsule holding arrangement 11,12,13 and straight axis 3' of outer face 3.

The shape of body 51 of capsule 50 can match the shape of cavity 12'.

Half apex angle β/2 of tapered cavity can be in the range of 3 to 15 deg, such as 4 to 12 deg, e.g. 5 to 10 deg, for instance about 6 or 7 deg.

Tapered cavity 12' can have an axis 12' upwardly oriented towards the other part 11 of first and second parts 11,12 when first and second parts 11,12 are in their closed position.

Tapered cavity 12' may be delimited by a lowermost generatrix or lateral surface line 12''' that is downwardly oriented towards the other part 11 of first and second parts 11,12.

The other part of the first and second parts can delimit a cavity for receiving the body of the capsule such as a tapered cavity, e.g. a conical or pyramidal cavity, or a straight cavity, e.g. a cylindrical or trapezoidal cavity, the cavity extending along an axis that is generally collinear with the longitudinal axis when the capsule holding arrangement is in its closed position.

The other part 11 of first and second parts 11,12 can include an extraction plate 11, such as a plate provided with piercing elements for opening a flow-through face 53 of capsule 50 or a non-intrusive plate for cooperating with a pre-opened or a self-opening flow-through face 53 of capsule 50.

First and second parts 11,12 can be relatively movable from their open position to their closed position and vice versa along a motion path that generally follows longitudinal axis 10'.

The motion path may follow strictly longitudinal axis 10' or it may depart from longitudinal axis 10' by a distance of less than 15%, such as less than 10% or 5%, of a closure distance separating the open and the closed positions.

First and second parts 11,12 can be only relatively translated along the motion path.

First and second parts 11,12 can be relatively translatable and relatively pivotable by a pivoting angle δ of less than 30 deg, such as less than 20 deg, e.g. less than 15, 10 or 5 deg. For instance, one part 12 of first and second parts 11,12 delimits a cavity 12' with a cavity opening 12a' for receiving a body 51 of capsule 50 and cavity opening 12a' is pivoted downwards in the open position for:
- allowing or facilitating evacuation of capsule body 51 and/or residual liquid out of cavity 12' by gravity; and/or
- avoiding jamming of capsule 50 between first and second parts 11,12 upon removal of capsule body 51 out of cavity 12' e.g. by retaining capsule 50, typically by retaining a capsule flange or edge 52 of capsule 50, at the other part 11 of first and second parts 11,12 when first and second parts 11,12 are relatively moved into their open position.

As schematically illustrated in Fig. 6, machine 1 may include a fluid circuit 7 connecting capsule holding arrangement 11,12,13, e.g. at least one part 12 of first and second parts 11,12, to a source of liquid, e.g. water, such as a liquid reservoir 8 connected to fluid circuit 7 by a reservoir outlet 80. Fluid circuit 7 may include at least one device 70,71,72 selected from: a pump 70 e.g. a solenoid (reciprocating piston) pump or a peristaltic pump or a diaphragm pump; a thermal conditioner 71, e.g. a heater and/or a cooler, such as a batch heater e.g. a boiler or a continuous heater such as thermoblock; and a sensor 72 such as a temperature sensor, e.g. a temperature sensor integrated in or separate from a thermal conditioner 71, or a pressure sensor, e.g. a pressure sensor downstream a pump 70, or a flow meter, e.g. a flowmeter upstream a pump 70. Such device 70,71,72 can be controlled and/or powered via a control unit 4, e.g. a control unit 4 in seat 22 as described above.

Capsule holding arrangement 11,12,13 in the open position, and optionally outer face 3, can delimit a capsule insertion channel 9, such as a channel fitted with one or more insertion guides 90 for guiding a capsule flange or edge 52 of capsule 50 to inbetween first and second parts 11,12 in the open position. Capsule insertion channel 9, e.g. insertion guide 91, may extend along an insertion axis 9' that is generally orthogonal to longitudinal axis 10'. Insertion axis 9' and longitudinal axis 10' can be at a relative angle in the range of 70 to 110 deg such as 80 to 100 deg, e.g. 85 to 95 deg.

Machine 1 can be operated in the following manner:
First, user-handle 20 can be actuated to pivot handle 20 about the axis 21 that is located at outer face 3 of housing 2 between the first and second positions to relative move, generally along longitudinal axis 10' at an angle relative to straight axis 3' of outer face 3, first and second parts 11,12 into the open position.

Then, capsule 50 may be inserted inbetween the first and second parts 11,12 in the open position, e.g. via a capsule insertion channel 9 as described above.

Thereafter, user-handle 20 can be actuated to pivot it about axis 21 between first and second positions to relatively move, generally along longitudinal axis 10', first and second parts 11,12 into the closed position to secure capsule 50 in an extraction configuration.

Then, capsule 50 may be extracted to form the beverage, e.g. by activating the device (s) of the above described fluid circuit 7. The beverage may be dispensed via the above outlet 14 to a user-recipient 6'.

Finally, user-handle 20 may be actuated to pivot handle 20 about axis 21 between first and second positions to relative move, generally along the longitudinal axis 10', first and second parts 11,12 into the open position to remove, e.g. by gravity, capsule 50 from inbetween first and second parts 11,12. Capsule 50 may be removed to removable receptacle 5 as described above.

Capsule 50 may include a body 51, e.g. a generally straight or tapered body. Capsule 50 can have a circular peripheral annulus flange 52, e.g. a flexible or rigid flange, extending from a peripheral part, e.g. an edge or face 53, of body 51. Capsule 50 can contain a flavoring ingredient for preparing tea, coffee, hot chocolate, cold chocolate, milk, soup or baby food.

## Claims

1. A machine (1) for preparing a beverage comprises a housing (2) having an outer face (3) extending along a generally straight axis (3') and a device (10) for extracting a capsule (50), the device (10) comprising:
- a user-handle (20), such as a lever handle e.g. a plate-like lever bar or a U-shaped handle, pivotable between first and second positions about a pivoting axis (21) that is located at the outer face (3), e.g. the user-handle (20) being assembled or fixed to or being mounted about a pivoting axle (21), the user-handle being optionally pivotable between a first position generally along the outer face (3) and a second position angled to the outer face (3) generally outwardly from the housing (2), the handle in the second position being for instance at an angle (α) in the range of 60 to 120 deg relative to the straight axis (3'), such as 80 to 100 deg, e.g. 90 deg; and
- a capsule holding arrangement (11,12,13) having a longitudinal axis (10') and comprising a first part (11) and a second part (12) that are relatively movable generally along the longitudinal axis (10'), by pivoting the user-handle (20) between its first and second positions e.g. from the second position into the first position, from:
- an open position in which the first and second parts (11,12) are distant from each other for inserting said capsule (50) into the device (10) and/or removing said capsule (50) from the device (10); into
- a closed position in which the first and second parts (11,12) are promximate to each other to form a seat (12a), e.g. a capsule extraction chamber, for holding said capsule (50) in an extraction position between the first and second parts (11,12), optionally seat (12a) extending along a seat direction (12'') that is parallel to or collinear with the longitudinal axis (10'), the seat direction (12'') typically constituting a general extraction direction along the seat (12a);
and
- a converter (16,17), e.g. a mechanical converter and/or motorized converter, connected to the handle (20) and to at least one part (12) of the first and second parts (11,12) for converting movements of the handle (20) into corresponding relative movements of the first and second parts (11,12), optionally the converter (16,17) comprising one or more mechanical transmission elements selected from:
- at least one knuckle-joint arrangement (16,17) such as a plurality of knuckle joint arrangements (16,17), e.g. a plurality of arrangements (16,17) in a serial configuration, optionally the knuckle-joint arrangements (16,17) connecting the user-handle (20) to at least one part (12) of the first and second parts (11,12) in a serial configuration;
- one or more gears, such as toothed gears; and
- at least one transmission belt,
the capsule holding arrangement (11,12,13) being at least partly in the housing (2) and adjacent to the outer face (3),
optionally:
- the first and second parts (11,12) being relatively movable along at least one guide (15), e.g. a pair of lateral guides (15), that extends generally along the longitudinal axis (10') or generally in parallel to the longitudinal axis (10'), for instance:
- at least one of the first and the second parts (11,12) being provided with one or more guide followers (17'), such as at least one of a roller, a pin, a rod and an axle (17'), e.g. an axle (17') connecting the first or second part (11,12) to the converter (16,17); and/or
- said guide (15) comprising a rail or groove or cam (15) for guiding the guide follower(s) (17') generally along or generally in parallel the longitudinal axis (10');
- the housing (2) having a bottom (3a) for being placed on a support surface (2') external to such machine (1), e.g. via one or more machine feet (31) fixed to the bottom (3a), so that the straight axis (3') is generally parallel to the bottom (3a), the outer face (3) forming a machine top face; and/or
- the capsule holding arrangement (11,12,13) comprising a frame (13) that is directly or indirectly fixed to the housing (2), such as a frame that extends longitudinally along the longitudinal direction (10'), the first and second parts (11,12) being associated with the frame so that at least one part (12) of said first and second parts (11,12) is movable along the frame (13), the frame (13) having for instance one or more of the following features:
- the other part (11) of said first and second parts (11,12) being fixed to or integral with the frame (13), or the other part (11) being movable relative to the frame;
- the pivoting axis (21) of the user-handle (20) extending through the frame (13), e.g. the axle (21) when present being mounted, assembled or fixed to the frame (13); and
- the converter (16,17) being mounted to the frame (13),
the capsule holding arrangement (11,12,13) being tilted relative to the outer face (3) so that the longitudinal axis (10') is angled relative to the straight axis (3') whereby a first end (131) of the arrangement (11,12,13) facing the outer face (3) is at a first distance to the face's straight axis (3'), such as proximate to the outer face (3), and a second opposite end (132) of the arrangement (11,12,13) facing the outer face (3) is at a second distance to the face's straight axis (3'), such as distant to the outer face (3), the first distance being shorter than the second distance, **characterised in that**:
- such machine (1) comprises a removable receptacle (5), the capsule holding arrangement (11,12,13) at the first end (131) being located between the receptacle (5) and the straight axis (3'), such as between the receptacle (5) and the outer face (3); and/or
- the holding arrangement (11,12,13) comprises or is fixed to an outlet (14) at the first end (131) of the arrangement, e.g. an outlet (14) covered by a housing head (2a) of the housing (2), the outlet (14) being located above a beverage dispensing area (6) configured for receiving a user-recipient (6'), e.g. a user-mug and/or a user-cup, to be filled with beverage dispensed from the outlet (14).

2. The machine of claim 1, wherein the second end (132) and the straight axis (3'), e.g. the outer face (3), delimit a seat (22) in which a machine component, such as an electric component (4) e.g. a control unit or a flowmeter or a pump or a heater or a fluid guide, is housed, optionally the electric component (4), e.g. a control unit, being associated with a user-interface (41) such as a user-interface located on the housing (2) or extending beyond the straight axis (3') or adjacent the straight axis (3') outside the housing (2), e.g. a user-interface (41) that is rigidly fixed to the electric component (4).

3. The machine of claim 1 or 2, wherein said receptacle (5) is configured for: collecting waste material, e.g. used capsules (50) or liquid residues or cleaning fluid from the capsule holding arrangement (11,12,13); or dispensing an ingredient supply such as capsules (50) or liquid such as water to the capsule holding arrangement (11,12,13) .

4. The machine of any preceding claim, wherein said dispensing area (6) is associated with a machine recipient support (61) for supporting said recipient (6') under the outlet (14), such as a support (61) that is:
- associated with a drip tray (62) e.g. a drip tray supporting the support (61); and/or
- movable relative to the housing (2) vertically under the outlet and/or away from under the outlet (14) for enabling a placement of user-recipients (6') of different heights under the outlet (14).

5. The machine of any preceding claim, wherein the longitudinal axis (10') of the capsule holding arrangement (11,12,13) is at an angle (γ) relative to the straight axis (3') of the outer face (3) in the range of 2 to 25 deg, such as 3 to 15 deg, e.g. 4 to 10 deg. for instance about 5 or 7 deg.

6. The machine of any preceding claim, wherein at least one part (12) of the first and second parts (11,12) delimits a cavity (12') for receiving a body (51) of said capsule (50), such as a tapered cavity, e.g. a conical or pyramidal cavity, or a straight cavity, e.g. a cylindrical or trapezoidal cavity, said cavity (12') extending along an axis (12'') that is generally collinear with the longitudinal axis (10') when the capsule holding arrangement (11,12,13) is in its closed position.

7. The machine of claim 6, wherein at least one part (12) of the first and second parts (11,12) delimits a tapered cavity (12'), e.g. a conical or pyramidal cavity, for receiving a body (51) of said capsule (50), the cavity (12') having a half apex angle (β/2) that is greater than an angle (γ) between the longitudinal axis (10') of the capsule holding arrangement (11,12,13) and the straight axis (3') of the outer face (3), optionally the cavity (12') having one or more of the following features:
- the half apex angle (β/2) of the tapered cavity being in the range of 3 to 15 deg, such as 4 to 12 deg, e.g. 5 to 10 deg, for instance about 6 or 7 deg;
- the tapered cavity (12') having an axis (12') upwardly oriented towards the other part (11) of said first and second parts (11,12) when the first and second parts (11,12) are in their closed position; and
- the tapered cavity (12') being delimited by a lowermost generatrix or lateral surface line (12''') that is downwardly oriented towards the other part (11) of said first and second parts (11,12).

8. The machine of claim 6 or 7, wherein the other part (11) of said first and second parts (11,12):
- delimits a cavity for receiving the body of said capsule such as a tapered cavity, e.g. a conical or pyramidal cavity, or a straight cavity, e.g. a cylindrical or trapezoidal cavity, said cavity extending along an axis that is generally collinear with the longitudinal axis when the capsule holding arrangement is in its closed position; and/or
- comprises an extraction plate (11), such as a plate provided with piercing elements for opening a flow-through face (53) of said capsule (50) or a non-intrusive plate for cooperating with a pre-opened or a self-opening flow-through face (53) of said capsule (50) .

9. The machine of any preceding claim, wherein the first and second parts (11,12) are relatively movable from their open position to their closed position and vice versa along a motion path that generally follows the longitudinal axis (10') and wherein
- the motion path follows strictly the longitudinal axis (10') or departs from the longitudinal axis (10') by a distance of less than 15%, such as less than 10% or 5%, of a closure distance separating the open and the closed positions; and/or
- the first and second parts (11,12) are:
- only relatively translatable along the motion path; or
- relatively translatable and relatively pivotable by a pivoting angle (δ) of less than 30 deg, such as less than 20 deg, e.g. less than 15, 10 or 5 deg, for instance one part (12) of the first and second parts (11,12) delimiting a cavity (12') with a cavity opening (12a') for receiving a body (51) of said capsule (50) and the cavity opening (12a') being pivoted downwards in the open position for:
- allowing or facilitating evacuation of said capsule body (51) and/or residual liquid out of the cavity (12') by gravity; and/or
- avoiding jamming of said capsule (50) between the first and second parts (11,12) upon removal of said capsule body (51) out of the cavity (12') e.g. by retaining said capsule (50), typically by retaining a capsule flange or edge (52) of said capsule (50), at the other part (11) of said first and second parts (11,12) when the first and second parts are relatively moved into their open position.

10. The machine of any preceding claim, which comprises a fluid circuit (7) connecting the capsule holding arrangement (11,12,13), e.g. at least one part (12) of the first and second parts (11,12), to a source of liquid, e.g. water, such as a liquid reservoir (8) connected to the fluid circuit (7) by a reservoir outlet (80), optionally the fluid circuit (7) comprising at least one device (70,71,72) selected from:
- a pump (70) e.g. a solenoid pump or a peristaltic pump or a diaphragm pump;
- a thermal conditioner (71), e.g. a heater and/or a cooler, such as a batch heater e.g. a boiler or a continuous heater such as thermoblock; and
- a sensor (72) such as a temperature sensor, e.g. a temperature sensor integrated in or separate from a thermal conditioner (71), or a pressure sensor, e.g. a pressure sensor downstream a pump (70), or a flow meter, e.g. a flowmeter upstream a pump (70),
such device (70,71,72) being for instance controlled and/or powered via a control unit (4), e.g. a control unit (4) in a seat (22) as defined in claim 2.

11. The machine of any preceding claim, wherein the capsule holding arrangement (11,12,13) in the open position, and optionally the outer face (3), delimit(s) a capsule insertion channel (9), such as a channel provided with one or more insertion guides (90) for guiding a capsule flange or edge (52) of said capsule (50) to inbetween said first and second parts (11,12) in the open position, said capsule insertion channel (9), e.g. insertion guide (91), extending along an insertion axis (9') that is generally orthogonal to the longitudinal axis (10'), the insertion axis (9') and the longitudinal axis being for instance at a relative angle in the range of 70 to 110 deg such as 80 to 100 deg, e.g. 85 to 95 deg.

12. A combination of a machine as defined in any preceding claim and a capsule (50), wherein the capsule (50) is held in the capsule holding arrangement (11,12,13) between the first and second parts in the closed position and extends along the longitudinal axis (10').

13. A method of preparing a beverage in a machine as defined in any one of claims 1 to 11, which method comprises the steps of:
- actuating the user-handle (20) to pivot the handle (20) about the axis (21) that is located at the outer face (3) of the housing (2) between the first and second positions to relative move, generally along the longitudinal axis (10') at an angle (γ) relative to the straight axis (3') of the outer face (3), the first and second parts (11,12) into the open position;
- inserting a capsule (50) inbetween the first and second parts (11,12) in the open position;
- actuating the user-handle (20) to pivot the handle (20) about the axis (21) between the first and second positions to relatively move, generally along the longitudinal axis (10'), the first and second parts (11,12) into the closed position to secure the capsule (50) in an extraction configuration;
- extracting the capsule (50) to form the beverage; and
- actuating the user-handle (20) to pivot the handle (20) about the axis (21) that is located at the outer face (3) of the housing (2) between the first and second positions to relative move, generally along the longitudinal axis (10') at an angle (γ) relative to the straight axis (3') of the outer face (3), the first and second parts (11,12) into the open position to remove the capsule from inbetween the first and second parts (11,12), e.g. remove the capsule (50) by gravity.

14. A use of a capsule (50) as a capsule (50) for:
- a machine as defined in any one of claim 1 to 11,
- implementing a combination as defined in claim 12, or
- carrying out a method as defined in claim 13.

15. The machine as defined in any one of claim 1 to 11 or the combination as defined in claim 12 or the method as defined in claim 13 or the use as defined in claim 14, wherein the capsule (50) comprises a body (51), e.g. a generally straight or tapered body, and optionally a circular peripheral annulus flange (52), e.g. a flexible or rigid flange, extending from a peripheral part, e.g. an edge or face (53), of the body (51), optionally the capsule (50) contains a flavoring ingredient for preparing tea, coffee, hot chocolate, cold chocolate, milk, soup or baby food.

## Patentansprüche

1. Maschine (1) zur Zubereitung eines Getränks, umfassend ein Gehäuse (2) mit einer Außenfläche (3), die sich entlang einer im Allgemeinen geraden Achse (3') erstreckt, und eine Vorrichtung (10) zum Extrahieren einer Kapsel (50), wobei die Vorrichtung (10) umfasst:
- einen Benutzergriff (20), wie einen Hebelgriff, z. B. eine plattenartige Hebelstange oder einen U-förmigen Griff, der zwischen einer ersten und einer zweiten Position um eine Schwenkachse (21), die an der Außenfläche (3) angeordnet ist, schwenkbar ist, wobei z. B. der Benutzergriff (20) an einer Schwenkachse (21) montiert oder befestigt oder um diese herum angebracht ist, wobei der Benutzergriff wahlweise zwischen einer ersten Position im Allgemeinen entlang der Außenfläche (3) und einer zweiten Position, die zu der Außenfläche (3) im Allgemeinen außerhalb des Gehäuses (2) abgewinkelt ist, schwenkbar ist, wobei der Griff in der zweiten Position zum Beispiel in einem Winkel (α) im Bereich von 60 bis 120 Grad relativ zu der geraden Achse (3'), wie 80 bis 100 Grad, z. B. 90 Grad, angeordnet ist; und
- eine Kapselhalteanordnung (11,12,13), die eine Längsachse (10') aufweist und einen ersten Teil (11) und einen zweiten Teil (12) umfasst, die im Allgemeinen entlang der Längsachse (10') relativ bewegbar sind, indem der Benutzergriff (20) zwischen seiner ersten und zweiten Position, z. B. von der zweiten Position in die erste Position, geschwenkt wird von:
- einer offenen Position, in der der erste und der zweite Teil (11,12) voneinander entfernt sind, um die Kapsel (50) in die Vorrichtung (10) einzusetzen und/oder die Kapsel (50) aus der Vorrichtung (10) zu entfernen; in
- eine geschlossene Position, in der der erste und der zweite Teil (11,12) nahe beieinander liegen, um einen Sitz (12a), z. B. eine Kapselextraktionskammer, zum Halten der Kapsel (50) in einer Extraktionsposition zwischen dem ersten und dem zweiten Teil (11,12) zu bilden, wobei sich wahlweise der Sitz (12a) entlang einer Sitzrichtung (12") erstreckt, die parallel zu oder kollinear mit der Längsachse (10') ist, wobei die Sitzrichtung (12") in der Regel eine allgemeine Extraktionsrichtung entlang des Sitzes (12a) bildet;
und
- einen Wandler (16,17), z. B. einen mechanischen Wandler und/oder motorisierten Wandler, der mit dem Griff (20) und mit mindestens einem Teil (12) des ersten und des zweiten Teils (11,12) verbunden ist, um Bewegungen des Griffs (20) in entsprechende relative Bewegungen des ersten und des zweiten Teils (11,12) umzuwandeln, wobei der Wandler (16,17) wahlweise ein oder mehrere mechanische Übertragungselemente umfasst, die ausgewählt sind aus:
- mindestens einer Gelenkanordnung (16,17), wie einer Vielzahl von Gelenkanordnungen (16,17), z. B. einer Vielzahl von Anordnungen (16,17) in einer seriellen Konfiguration, wobei wahlweise die Gelenkanordnungen (16,17) den Benutzergriff (20) mit mindestens einem Teil (12) des ersten und des zweiten Teils (11,12) in einer seriellen Konfiguration verbinden;
- einem oder mehreren Getrieben, wie Zahnrädern; und
- mindestens einem Übertragungsriemen,
wobei die Kapselhalteanordnung (11,12,13) mindestens teilweise in dem Gehäuse (2) und angrenzend an die Außenfläche (3) angeordnet ist,
wahlweise:
- wobei der erste und der zweite Teil (11,12) entlang mindestens einer Führung (15), z. B. eines Paars von seitlichen Führungen (15), die sich im Allgemeinen entlang der Längsachse (10') oder im Allgemeinen parallel zu der Längsachse (10') erstreckt, relativ bewegbar sind, zum Beispiel:
- wobei mindestens einer des ersten und des zweiten Teils (11,12) mit einem oder mehreren Führungsmitnehmern (17'), wie mindestens einem von einer Rolle, einem Stift, einer Stange und einer Achse (17'), z. B. einer Achse (17'), die den ersten oder den zweiten Teil (11,12) mit dem Wandler (16,17) verbindet, bereitgestellt ist; und/oder
- wobei die Führung (15) eine Schiene oder eine Nut oder einen Nocken (15) umfasst, um den oder die Führungsmitnehmer (17') im Allgemeinen entlang oder im Allgemeinen parallel zu der Längsachse (10') zu führen;
- wobei das Gehäuse (2) einen Boden (3a) aufweist, um auf einer Stützfläche (2') außerhalb einer solchen Maschine (1) platziert zu werden, z. B. mittels eines oder mehrerer Maschinenfüße (31), die an dem Boden (3a) befestigt sind, sodass die gerade Achse (3') im Allgemeinen parallel zu dem Boden (3a) ist, wobei die Außenfläche (3) eine Maschinenoberfläche bildet; und/oder
- wobei die Kapselhalteanordnung (11,12,13) einen Rahmen (13) umfasst, der direkt oder indirekt an dem Gehäuse (2) befestigt ist, wie einen Rahmen, der sich längsverlaufend entlang der Längsrichtung (10') erstreckt, wobei der erste und der zweite Teil (11,12) dem Rahmen zugeordnet sind, sodass mindestens ein Teil (12) des ersten und des zweiten Teils (11,12) entlang des Rahmens (13) bewegbar ist, wobei der Rahmen (13) zum Beispiel eines oder mehrere der folgenden Merkmale aufweist:
- der andere Teil (11) des ersten und des zweiten Teils (11,12) ist an dem Rahmen (13) befestigt oder mit diesem einstückig, oder der andere Teil (11) ist relativ zu dem Rahmen bewegbar;
- die Schwenkachse (21) des Benutzergriffs (20) erstreckt sich durch den Rahmen (13), z. B. ist die Achse (21), wenn vorhanden, an dem Rahmen (13) angebracht, montiert oder befestigt; und
- der Wandler (16,17) ist an dem Rahmen (13) angebracht,
wobei die Kapselhalteanordnung (11,12,13) relativ zu der Außenfläche (3) geneigt ist, sodass die Längsachse (10') relativ zu der geraden Achse (3') abgewinkelt ist, wobei ein erstes Ende (131) der Anordnung (11,12,13), das der Außenfläche (3) zugewandt ist, in einem ersten Abstand zu der geraden Achse (3') der Fläche, wie in der Nähe der Außenfläche (3), angeordnet ist, und ein zweites gegenüberliegendes Ende (132) der Anordnung (11,12,13), das der Außenfläche (3) zugewandt ist, in einem zweiten Abstand zu der geraden Achse (3') der Fläche, wie entfernt von der Außenfläche (3), angeordnet ist, wobei der erste Abstand kürzer als der zweite Abstand ist, **dadurch gekennzeichnet, dass:**
- eine solche Maschine (1) einen abnehmbaren Behälter (5) umfasst, wobei die Kapselhalteanordnung (11,12,13) an dem ersten Ende (131) zwischen dem Behälter (5) und der geraden Achse (3'), wie zwischen dem Behälter (5) und der Außenfläche (3), angeordnet ist; und/oder
- die Halteanordnung (11,12,13) einen Auslass (14) an dem ersten Ende (131) der Anordnung, z. B. einen Auslass (14), der von einem Gehäusekopf (2a) des Gehäuses (2) abgedeckt ist, umfasst oder daran befestigt ist, wobei der Auslass (14) über einem Getränkeausgabebereich (6) angeordnet ist, der konfiguriert ist, um eine Benutzeraufnahme (6'), z. B. einen Benutzerbecher und/oder eine Benutzertasse, die mit einem aus dem Auslass (14) ausgegebenen Getränk gefüllt werden soll, aufzunehmen.

2. Maschine nach Anspruch 1, wobei das zweite Ende (132) und die gerade Achse (3'), z. B. die Außenfläche (3), einen Sitz (22) begrenzen, in dem eine Maschinenkomponente, wie eine elektrische Komponente (4), z. B. eine Steuereinheit oder ein Durchflussmesser oder eine Pumpe oder eine Heizung oder eine Fluidführung, untergebracht ist, wobei wahlweise die elektrische Komponente (4), z. B. eine Steuereinheit, einer Benutzeroberfläche (41), wie einer Benutzeroberfläche, die an dem Gehäuse (2) angeordnet ist oder sich über die gerade Achse (3') hinaus oder angrenzend an die gerade Achse (3') außerhalb des Gehäuses (2) erstreckt, z. B. einer Benutzeroberfläche (41), die starr mit der elektrischen Komponente (4) verbunden ist, zugeordnet ist.

3. Maschine nach Anspruch 1 oder 2, wobei der Behälter (5) konfiguriert ist zum: Sammeln von Abfallmaterial, z. B. gebrauchten Kapseln (50) oder Flüssigkeitsresten oder Reinigungsflüssigkeit aus der Kapselhalteanordnung (11,12,13); oder Ausgeben eines Zutatenvorrats, wie Kapseln (50) oder Flüssigkeit, wie Wasser, an die Kapselhalteanordnung (11,12,13).

4. Maschine nach einem der vorstehenden Ansprüche, wobei der Ausgabebereich (6) einem Maschinenaufnahmeträger (61) zum Tragen der Aufnahme (6') unter dem Auslass (14) zugeordnet ist, wie einem Träger (61), der:
- einer Auffangschale (62), z. B. einer Auffangschale, die den Träger (61) trägt, zugeordnet ist; und/oder
- relativ zu dem Gehäuse (2) vertikal unter dem Auslass und/oder weg von unter dem Auslass (14) bewegbar ist, um eine Platzierung von Benutzeraufnahmen (6') unterschiedlicher Höhe unter dem Auslass (14) zu ermöglichen.

5. Maschine nach einem der vorstehenden Ansprüche, wobei die Längsachse (10') der Kapselhalteanordnung (11,12,13) in einem Winkel (γ) relativ zu der geraden Achse (3') der Außenfläche (3) im Bereich von 2 bis 25 Grad, wie 3 bis 15 Grad, z. B. 4 bis 10 Grad, zum Beispiel etwa 5 oder 7 Grad, liegt.

6. Maschine nach einem der vorstehenden Ansprüche, wobei mindestens ein Teil (12) des ersten und des zweiten Teils (11,12) einen Hohlraum (12') zum Aufnehmen eines Körpers (51) der Kapsel (50), wie einen konischen Hohlraum, z. B. einen kegelförmigen oder pyramidenförmigen Hohlraum, oder einen geraden Hohlraum, z. B. einen zylindrischen oder trapezförmigen Hohlraum, begrenzt, wobei sich der Hohlraum (12') entlang einer Achse (12") erstreckt, die im Allgemeinen kollinear mit der Längsachse (10') verläuft, wenn die Kapselhalteanordnung (11,12,13) in ihrer geschlossenen Position ist.

7. Maschine nach Anspruch 6, wobei mindestens ein Teil (12) des ersten und des zweiten Teils (11,12) einen konischen Hohlraum (12'), z. B. einen kegelförmigen oder pyramidenförmigen Hohlraum, zum Aufnehmen eines Körpers (51) der Kapsel (50) begrenzt, wobei der Hohlraum (12') einen halben Scheitelwinkel (β/2) aufweist, der größer ist als ein Winkel (γ) zwischen der Längsachse (10') der Kapselhalteanordnung (11,12,13) und der geraden Achse (3') der Außenfläche (3), wobei wahlweise der Hohlraum (12') eines oder mehrere der folgenden Merkmale aufweist:
- der halbe Scheitelwinkel (β/2) des konischen Hohlraums liegt im Bereich von 3 bis 15 Grad, wie 4 bis 12 Grad, z. B. 5 bis 10 Grad, zum Beispiel etwa 6 oder 7 Grad;
- der konische Hohlraum (12') weist eine Achse (12') auf, die nach oben zu dem anderen Teil (11) des ersten und des zweiten Teils (11,12) ausgerichtet ist, wenn der erste und der zweite Teil (11,12) in ihrer geschlossenen Position sind; und
- der konische Hohlraum (12') ist durch eine unterste Mantellinie oder Seitenflächenlinie (12''') begrenzt, die nach unten zu dem anderen Teil (11) des ersten und des zweiten Teils (11,12) ausgerichtet ist.

8. Maschine nach Anspruch 6 oder 7, wobei der andere Teil (11) des ersten und des zweiten Teils (11,12):
- einen Hohlraum zum Aufnehmen des Körpers der Kapsel, wie einen konischen Hohlraum, z. B. einen kegelförmigen oder pyramidenförmigen Hohlraum, oder einen geraden Hohlraum, z. B. einen zylindrischen oder trapezförmigen Hohlraum, begrenzt, wobei sich der Hohlraum entlang einer Achse erstreckt, die im Allgemeinen kollinear mit der Längsachse ist, wenn die Kapselhalteanordnung in ihrer geschlossenen Position ist; und/oder
- eine Extraktionsplatte (11), wie eine Platte, die mit Durchstoßelementen zum Öffnen einer Durchflussfläche (53) der Kapsel (50) bereitgestellt ist, oder eine nicht intrusive Platte zum Zusammenwirken mit einer vorgeöffneten oder einer sich selbst öffnenden Durchflussfläche (53) der Kapsel (50), umfasst.

9. Maschine nach einem der vorstehenden Ansprüche, wobei der erste und der zweite Teil (11,12) aus ihrer offenen Position in ihre geschlossene Position und umgekehrt entlang einer Bewegungsbahn, die im Allgemeinen der Längsachse (10') folgt, relativ bewegbar sind und wobei
- die Bewegungsbahn genau der Längsachse (10') folgt oder von der Längsachse (10') um einen Abstand von weniger als 15 %, wie weniger als 10 % oder 5 %, eines Schließabstands, der die offene und die geschlossene Position trennt, abweicht; und/oder
- wahlweise der erste und der zweite Teil (11,12) sind:
- nur entlang der Bewegungsbahn relativ translatorisch; oder
- relativ verschiebbar und um einen Schwenkwinkel (δ) von weniger als 30 Grad, wie weniger als 20 Grad, z. B. weniger als 15, 10 oder 5 Grad, relativ schwenkbar, wobei zum Beispiel ein Teil (12) des ersten und des zweiten Teils (11,12) einen Hohlraum (12') mit einer Hohlraumöffnung (12a') zum Aufnehmen eines Körpers (51) der Kapsel (50) begrenzt und die Hohlraumöffnung (12a') in der offenen Position nach unten geschwenkt wird, um:
- die Evakuierung des Kapselkörpers (51) und/oder von Restflüssigkeit aus dem Hohlraum (12') durch Schwerkraft zu ermöglichen oder zu erleichtern; und/oder
- ein Verklemmen der Kapsel (50) zwischen dem ersten und dem zweiten Teil (11,12) beim Entfernen des Kapselkörpers (51) aus dem Hohlraum (12') zu vermeiden, z. B. durch Festhalten der Kapsel (50), in der Regel durch Festhalten eines Kapselflansches oder -randes (52) der Kapsel (50), an dem anderen Teil (11) des ersten und des zweiten Teils (11,12), wenn der erste und der zweite Teil relativ in ihre offene Position bewegt werden.

10. Maschine nach einem der vorstehenden Ansprüche, die einen Fluidkreislauf (7) umfasst, der die Kapselhalteanordnung (11,12,13), z. B. mindestens einen Teil (12) des ersten und des zweiten Teils (11,12), mit einer Quelle einer Flüssigkeit, z. B. Wasser, wie einem Flüssigkeitsbehälter (8), der über einen Behälterauslass (80) mit dem Fluidkreislauf (7) verbunden ist, verbindet, wobei der Fluidkreislauf (7) wahlweise mindestens eine Vorrichtung (70,71,72) umfasst, die ausgewählt ist aus:
- einer Pumpe (70), z. B. einer Magnetpumpe oder einer Peristaltikpumpe oder einer Membranpumpe;
- einem thermischen Konditionierer (71), z. B. einem Erhitzer und/oder einem Kühler, wie einem Chargenerhitzer, z. B. einem Kessel, oder einem Durchlauferhitzer, wie einem Thermoblock; und
- einem Sensor (72), wie einem Temperatursensor, z. B. einem Temperatursensor, der in einen thermischen Konditionierer (71) integriert oder von diesem getrennt ist, oder einem Drucksensor, z. B. einem Drucksensor stromabwärts einer Pumpe (70), oder einem Durchflussmesser, z. B. einem Durchflussmesser stromaufwärts einer Pumpe (70),
wobei eine solche Vorrichtung (70,71,72) zum Beispiel über eine Steuereinheit (4), z. B. eine Steuereinheit (4) in einem Sitz (22), wie in Anspruch 2 definiert, gesteuert und/oder mit Strom versorgt wird.

11. Maschine nach einem der vorstehenden Ansprüche, wobei die Kapselhalteanordnung (11,12,13) in der offenen Position, und wahlweise die Außenfläche (3), einen Kapseleinsetzkanal (9), wie einen Kanal, der mit einer oder mehreren Einsetzführungen (90) zum Führen eines Kapselflansches oder -randes (52) der Kapsel (50) an eine Stelle zwischen dem ersten und dem zweiten Teil (11,12) in der offenen Position bereitgestellt ist, begrenzt/begrenzen, wobei sich der Kapseleinsetzkanal (9), z. B. die Einsetzführung (91), entlang einer Einsetzachse (9') erstreckt, die im Allgemeinen senkrecht zu der Längsachse (10') ist, wobei die Einsetzachse (9') und die Längsachse zum Beispiel in einem relativen Winkel im Bereich von 70 bis 110 Grad, wie 80 bis 100 Grad, z. B. 85 bis 95 Grad, sind.

12. Kombination aus einer Maschine nach einem der vorstehenden Ansprüche und einer Kapsel (50), wobei die Kapsel (50) in der Kapselhalteanordnung (11,12,13) zwischen dem ersten und dem zweiten Teil in der geschlossenen Position gehalten wird und sich entlang der Längsachse (10') erstreckt.

13. Verfahren zum Zubereiten eines Getränks in einer Maschine nach einem der Ansprüche 1 bis 11, wobei das Verfahren die Schritte umfasst:
- Betätigen des Benutzergriffs (20), um den Griff (20) um die Achse (21) zu schwenken, die sich an der Außenfläche (3) des Gehäuses (2) zwischen der ersten und der zweiten Position befindet, um den ersten und den zweiten Teil (11,12), im Allgemeinen entlang der Längsachse (10') in einem Winkel (γ) relativ zu der geraden Achse (3') der Außenfläche (3), relativ in die offene Position zu bewegen;
- Einsetzen einer Kapsel (50) zwischen den ersten und den zweiten Teil (11,12) in der offenen Position;
- Betätigen des Benutzergriffs (20), um den Griff (20) um die Achse (21) zwischen der ersten und der zweiten Position zu schwenken, um den ersten und den zweiten Teil (11,12), im Allgemeinen entlang der Längsachse (10'), relativ in die geschlossene Position zu bewegen, um die Kapsel (50) in einer Extraktionskonfiguration zu sichern;
- Extrahieren der Kapsel (50), um das Getränk zu bilden; und
- Betätigen des Benutzergriffs (20), um den Griff (20) um die Achse (21) zu schwenken, die sich an der Außenfläche (3) des Gehäuses (2) zwischen der ersten und der zweiten Position befindet, um den ersten und den zweiten Teil (11,12), im Allgemeinen entlang der Längsachse (10') in einem Winkel (γ) relativ zu der geraden Achse (3') der Außenfläche (3), relativ in die offene Position zu bewegen, um die Kapsel von einer Stelle zwischen dem ersten und dem zweiten Teil (11,12) zu entfernen, z. B. die Kapsel (50) durch Schwerkraft zu entfernen.

14. Verwendung einer Kapsel (50) als Kapsel (50) für/zum:
- eine Maschine nach einem der Ansprüche 1 bis 11,
- Implementieren einer Kombination nach Anspruch 12 oder
- Ausführen eines Verfahrens nach Anspruch 13.

15. Maschine nach einem der Ansprüche 1 bis 11 oder Kombination nach Anspruch 12 oder Verfahren nach Anspruch 13 oder Verwendung nach Anspruch 14, wobei die Kapsel (50) einen Körper (51), z. B. einen im Allgemeinen geraden oder konischen Körper, und wahlweise einen kreisförmigen peripheren Ringflansch (52), z. B. einen flexiblen oder starren Flansch, der sich von einem peripheren Teil, z. B. einem Rand oder einer Fläche (53), des Körpers (51) erstreckt, umfasst, wobei die Kapsel (50) wahlweise einen Geschmacksstoff zum Zubereiten von Tee, Kaffee, heißer Schokolade, kalter Schokolade, Milch, Suppe oder Babynahrung enthält.

## Revendications

1. Machine (1) pour préparer une boisson qui comprend un boîtier (2) ayant une face externe (3) s'étendant le long d'un axe généralement linéaire (3') et un dispositif (10) pour extraire une capsule (50), le dispositif (10) comprenant :
- une poignée utilisateur (20), telle qu'une poignée à levier par exemple une barre-levier de type plaque ou une poignée en forme de U, pouvant pivoter entre des première et deuxième positions autour d'un axe de pivotement (21) qui est situé au niveau de la face externe (3), par exemple la poignée utilisateur (20) étant assemblée ou fixée à ou étant montée autour d'un axe de pivotement (21), la poignée utilisateur pouvant facultativement pivoter entre une première position généralement le long de la face externe (3) et une deuxième position inclinée par rapport à la face externe (3) généralement extérieurement au boîtier (2), la poignée dans la deuxième position par exemple étant à un angle (α) dans la plage de 60 à 120 deg par rapport à l'axe linéaire (3'), tel que 80 à 100 deg, par exemple 90 deg ; et
- un agencement de maintien de capsule (11, 12, 13) ayant un axe longitudinal (10') et comprenant une première partie (11) et une deuxième partie (12) qui sont mobiles l'une par rapport à l'autre généralement le long de l'axe longitudinal (10'), en pivotant la poignée utilisateur (20) entre ses première et deuxième positions par exemple de la deuxième position à la première position, à partir de :
- une position ouverte dans laquelle les première et deuxième parties (11, 12) sont distantes l'une de l'autre pour insérer ladite capsule (50) dans le dispositif (10) et/ou retirer ladite capsule (50) du dispositif (10) ; vers
- une position fermée dans laquelle les première et deuxième parties (11, 12) sont à proximité l'une de l'autre pour former un site de placement (12a), par exemple une chambre d'extraction de capsule, pour maintenir ladite capsule (50) dans une position d'extraction entre les première et deuxième parties (11, 12), facultativement le site de placement (12a) s'étendant le long d'une direction de site de placement (12") qui est parallèle à ou colinéaire avec l'axe longitudinal (10'), la direction du site de placement (12") constituant typiquement une direction générale d'extraction le long du site de placement (12a) ;
et
- un convertisseur (16, 17), par exemple un convertisseur mécanique et/ou un convertisseur motorisé, relié à la poignée (20) et à au moins une partie (12) des première et deuxième parties (11, 12) pour la conversion de mouvements de la poignée (20) en mouvements relatifs correspondants des première et deuxième parties (11, 12), facultativement le convertisseur (16, 17) comprenant un ou plusieurs éléments de transmission mécanique choisis parmi :
- au moins un agencement de raccord articulé (16, 17) tel qu'une pluralité d'agencements de raccord articulé (16, 17), par exemple une pluralité d'agencements (16, 17) dans une configuration en série, facultativement les agencements de raccord articulé (16, 17) reliant la poignée utilisateur (20) à au moins une partie (12) des première et deuxième parties (11, 12) dans une configuration en série ;
- un ou plusieurs engrenages, tels que des engrenages dentés ; et
- au moins une courroie de transmission,
l'agencement de maintien de capsule (11, 12, 13) étant au moins partiellement dans le boîtier (2) et adjacent à la face externe (3),
facultativement :
- les première et deuxième parties (11, 12) étant mobiles l'une par rapport à l'autre le long d'au moins un guide (15), par exemple une paire de guides latéraux (15), qui s'étend généralement le long de l'axe longitudinal (10') ou généralement en parallèle à l'axe longitudinal (10'), par exemple :
- au moins l'une des première et deuxième parties (11, 12) étant pourvue d'un ou plusieurs suiveurs de guidage (17'), tels qu'au moins l'un parmi un rouleau, une broche, une tige et un arbre (17'), par exemple un arbre (17') reliant la première ou deuxième partie (11, 12) au convertisseur (16, 17) ; et/ou
- ledit guide (15) comprenant un rail ou une rainure ou une came (15) pour guider le(s) suiveur(s) de guidage (17') généralement le long de ou généralement en parallèle à l'axe longitudinal (10') ;
- le boîtier (2) ayant un fond (3a) destiné à être placé sur une surface de support (2') externe à une telle machine (1), par exemple par l'intermédiaire d'un ou plusieurs pieds de machine (31) fixés au fond (3a), de sorte que l'axe linéaire (3') est généralement parallèle au fond (3a), la face externe (3) formant une face supérieure de machine ; et/ou
- l'agencement de maintien de capsule (11, 12, 13) comprenant un châssis (13) qui est fixé directement ou indirectement au boîtier (2), tel qu'un châssis qui s'étend longitudinalement le long de la direction longitudinale (10'), les première et deuxième parties (11, 12) étant associées au châssis de sorte qu'au moins une partie (12) desdites première et deuxième parties (11, 12) est mobile le long du châssis (13), le châssis (13) ayant par exemple une ou plusieurs des caractéristiques suivantes :
- l'autre partie (11) desdites première et deuxième parties (11, 12) étant fixée à ou solidaire du châssis (13), ou l'autre partie (11) étant mobile par rapport au châssis ;
- l'axe de pivotement (21) de la poignée utilisateur (20) s'étendant à travers le châssis (13), par exemple l'arbre (21) lorsqu'il est présent étant monté, assemblé ou fixé au châssis (13) ; et
- le convertisseur (16, 17) étant monté au châssis (13),
l'agencement de maintien de capsule (11, 12, 13) étant incliné par rapport à la face externe (3) de sorte que l'axe longitudinal (10') est incliné par rapport à l'axe linéaire (3') moyennant quoi une première extrémité (131) de l'agencement (11, 12, 13) faisant face à la face externe (3) est à une première distance de l'axe linéaire (3') de la face, telle qu'à proximité de la face externe (3), et une deuxième extrémité opposée (132) de l'agencement (11, 12, 13) faisant face à la face externe (3) est à une deuxième distance de l'axe linéaire (3') de la face, telle que distante de la face externe (3), la première distance étant plus courte que la deuxième distance, **caractérisée en ce que** :
- une telle machine (1) comprend un réceptacle amovible (5), l'agencement de maintien de capsule (11, 12, 13) au niveau de la première extrémité (131) se situant entre le réceptacle (5) et l'axe linéaire (3'), tel qu'entre le réceptacle (5) et la face externe (3) ; et/ou
- l'agencement de maintien (11, 12, 13) comprend ou est fixé à une sortie (14) au niveau de la première extrémité (131) de l'agencement, par exemple une sortie (14) couverte par une tête de boîtier (2a) du boîtier (2), la sortie (14) se situant au-dessus d'une zone de distribution de boisson (6) configurée pour recevoir un récipient d'utilisateur (6'), par exemple un mug d'utilisateur et/ou une tasse d'utilisateur, à remplir avec une boisson distribuée à partir de la sortie (14).

2. Machine selon la revendication 1, dans laquelle la deuxième extrémité (132) et l'axe linéaire (3'), par exemple la face externe (3), délimitent un site de placement (22) dans laquelle un composant de machine, tel qu'un composant électrique (4) par exemple une unité de commande ou un débitmètre ou une pompe ou un chauffage ou un guide de fluide, est logé, facultativement le composant électrique (4), par exemple une unité de commande, étant associé à une interface utilisateur (41) telle qu'une interface utilisateur située sur le boîtier (2) ou s'étendant au-delà de l'axe linéaire (3') ou adjacent à l'axe linéaire (3') à l'extérieur du boîtier (2), par exemple une interface utilisateur (41) qui est solidarisée au composant électrique (4).

3. Machine selon la revendication 1 ou 2, dans laquelle ledit réceptacle (5) est configuré pour : collecter des déchets, par exemple des capsules usagées (50) ou des résidus liquides ou un fluide de nettoyage provenant de l'agencement de maintien de capsule (11, 12, 13) ; ou distribuer un approvisionnement en ingrédients tel que des capsules (50) ou un liquide tel que de l'eau à l'agencement de maintien de capsule (11, 12, 13).

4. Machine selon une quelconque revendication précédente, dans laquelle ladite zone de distribution (6) est associée à un support de récipient de machine (61) pour supporter ledit récipient (6') sous la sortie (14), tel qu'un support (61) qui est :
- associé à un plateau d'égouttage (62) par exemple un plateau d'égouttage supportant le support (61) ; et/ou
- mobile par rapport au boîtier (2) verticalement sous la sortie et/ou à l'écart de sous la sortie (14) pour permettre une mise en place de récipients d'utilisateur (6') de hauteurs différentes sous la sortie (14).

5. Machine selon une quelconque revendication précédente, dans laquelle l'axe longitudinal (10') de l'agencement de maintien de capsule (11, 12, 13) est à un angle (γ) par rapport à l'axe linéaire (3') de la face externe (3) dans la plage de 2 à 25 deg, tel que 3 à 15 deg, par exemple 4 à 10 deg. par exemple environ 5 ou 7 deg.

6. Machine selon une quelconque revendication précédente, dans laquelle au moins une partie (12) des première et deuxième parties (11, 12) délimite une cavité (12') pour recevoir un corps (51) de ladite capsule (50), telle qu'une cavité effilée, par exemple une cavité conique ou pyramidale, ou une cavité linéaire, par exemple une cavité cylindrique ou trapézoïdale, ladite cavité (12') s'étendant le long d'un axe (12") qui est généralement colinéaire avec l'axe longitudinal (10') lorsque l'agencement de maintien de capsule (11, 12, 13) est dans sa position fermée.

7. Machine selon la revendication 6, dans laquelle au moins une partie (12) des première et deuxième parties (11, 12) délimite une cavité effilée (12'), par exemple une cavité conique ou pyramidale, pour recevoir un corps (51) de ladite capsule (50), la cavité (12') ayant un demi-angle au sommet (β/2) qui est supérieur à un angle (γ) entre l'axe longitudinal (10') de l'agencement de maintien de capsule (11, 12, 13) et l'axe linéaire (3') de la face externe (3), facultativement la cavité (12') ayant une ou plusieurs des caractéristiques suivantes :
- le demi-angle au sommet (β/2) de la cavité effilée étant dans la plage de 3 à 15 deg, tel que 4 à 12 deg, par exemple 5 à 10 deg, par exemple environ 6 ou 7 deg ;
- la cavité effilée (12') ayant un axe (12') vers le haut orienté en direction de l'autre partie (11) desdites première et deuxième parties (11, 12) lorsque les première et deuxième parties (11, 12) sont dans leur position fermée ; et
- la cavité effilée (12') étant délimitée par une génératrice ou ligne de surface latérale (12''') la plus basse qui est orientée vers le bas en direction de l'autre partie (11) desdites première et deuxième parties (11, 12).

8. Machine selon la revendication 6 ou 7, dans laquelle l'autre partie (11) desdites première et deuxième parties (11, 12) :
- délimite une cavité pour recevoir le corps de ladite capsule telle qu'une cavité effilée, par exemple une cavité conique ou pyramidale, ou une cavité linéaire, par exemple une cavité cylindrique ou trapézoïdale, ladite cavité s'étendant le long d'un axe qui est généralement colinéaire avec l'axe longitudinal lorsque l'agencement de maintien de capsule est dans sa position fermée ; et/ou
- comprend une plaque d'extraction (11), telle qu'une plaque pourvue d'éléments de perçage pour ouvrir une face d'écoulement traversant (53) de ladite capsule (50) ou une plaque non intrusive destinée à coopérer avec une face d'écoulement traversant pré-ouverte ou à ouverture automatique (53) de ladite capsule (50).

9. Machine selon une quelconque revendication précédente, dans laquelle les première et deuxième parties (11, 12) sont mobiles l'une par rapport à l'autre de leur position ouverte à leur position fermée et inversement le long d'une trajectoire de mouvement qui suit généralement l'axe longitudinal (10') et dans laquelle
- la trajectoire de mouvement suit strictement l'axe longitudinal (10') ou dévie de l'axe longitudinal (10') d'une distance inférieure à 15 %, telle qu'inférieur à 10 % ou 5 %, d'une distance de fermeture séparant les positions ouverte et fermée ; et/ou
- les première et deuxième parties (11, 12) sont :
- uniquement déplaçables en translation l'une par rapport à l'autre le long de la trajectoire de mouvement ; ou
- déplaçables en translation l'une par rapport à l'autre et pivotantes l'une par rapport à l'autre d'un angle de pivotement (δ) inférieur à 30 deg, tel qu'inférieur à 20 deg, par exemple inférieur à 15, 10 ou 5 deg, par exemple une partie (12) des première et deuxième parties (11, 12) délimitant une cavité (12') avec une ouverture de cavité (12a') pour recevoir un corps (51) de ladite capsule (50) et l'ouverture de cavité (12a') étant pivotée vers le bas dans la position ouverte pour :
- permettre ou faciliter l'évacuation dudit corps de capsule (51) et/ou d'un liquide résiduel à l'extérieur de la cavité (12') par gravité ; et/ou
- éviter un blocage de ladite capsule (50) entre les première et deuxième parties (11, 12) lors du retrait dudit corps de capsule (51) à l'extérieur de la cavité (12') par exemple en retenant ladite capsule (50), typiquement en retenant un rebord ou bord de capsule (52) de ladite capsule (50), au niveau de l'autre partie (11) desdites première et deuxième parties (11, 12) lorsque les première et deuxième parties sont déplacées l'une par rapport à l'autre dans leur position ouverte.

10. Machine selon une quelconque revendication précédente, qui comprend un circuit de fluide (7) reliant l'agencement de maintien de capsule (11, 12, 13), par exemple au moins une partie (12) des première et deuxième parties (11, 12), à une source de liquide, par exemple de l'eau, telle qu'un réservoir de liquide (8) relié au circuit de fluide (7) par une sortie de réservoir (80), facultativement le circuit de fluide (7) comprenant au moins un dispositif (70, 71, 72) choisi parmi :
- une pompe (70) par exemple une pompe à solénoïde ou une pompe péristaltique ou une pompe à diaphragme ;
- un système de conditionnement thermique (71), par exemple un chauffage et/ou un refroidisseur, tel qu'un chauffage global par exemple un chauffe-eau ou un chauffage continu tel qu'un thermobloc ; et
- un capteur (72) tel qu'un capteur de température, par exemple un capteur de température intégré dans ou distinct d'un système de conditionnement thermique (71), ou un capteur de pression, par exemple un capteur de pression en aval d'une pompe (70), ou un débitmètre, par exemple un débitmètre en amont d'une pompe (70),
un tel dispositif (70, 71, 72) étant par exemple commandé et/ou alimenté en énergie par l'intermédiaire d'une unité de commande (4), par exemple une unité de commande (4) dans un site de placement (22) telle que définie dans la revendication 2.

11. Machine selon une quelconque revendication précédente, dans laquelle l'agencement de maintien de capsule (11, 12, 13) dans la position ouverte, et facultativement la face externe (3), délimite(nt) un canal d'insertion de capsule (9), tel qu'un canal pourvu d'un ou plusieurs guides d'insertion (90) pour guider un rebord ou bord de capsule (52) de ladite capsule (50) entre lesdites première et deuxième parties (11, 12) dans la position ouverte, ledit canal d'insertion de capsule (9), par exemple un guide d'insertion (91), s'étendant le long d'un axe d'insertion (9') qui est généralement orthogonal à l'axe longitudinal (10'), l'axe d'insertion (9') et l'axe longitudinal étant par exemple à un angle relatif dans la plage de 70 à 110 deg tel que 80 à 100 deg, par exemple 85 à 95 deg.

12. Combinaison d'une machine telle que définie dans l'une quelconque revendication précédente et d'une capsule (50), dans laquelle la capsule (50) est tenue dans l'agencement de maintien de capsule (11, 12, 13) entre les première et deuxième parties dans la position fermée et s'étend le long de l'axe longitudinal (10').

13. Procédé de préparation d'une boisson dans une machine telle que définie dans l'une quelconque des revendications 1 à 11, lequel procédé comprend les étapes consistant à :
- actionner la poignée utilisateur (20) pour pivoter la poignée (20) autour de l'axe (21) qui est situé au niveau de la face externe (3) du boîtier (2) entre les première et deuxième positions pour déplacer l'une par rapport à l'autre, généralement le long de l'axe longitudinal (10') selon un angle (γ) par rapport à l'axe linéaire (3') de la face externe (3), les première et deuxième parties (11, 12) dans la position ouverte ;
- insérer une capsule (50) entre les première et deuxième parties (11, 12) dans la position ouverte ;
- actionner la poignée utilisateur (20) pour pivoter la poignée (20) autour de l'axe (21) entre les première et deuxième positions pour déplacer l'une par rapport à l'autre, généralement le long de l'axe longitudinal (10'), les première et deuxième parties (11, 12) dans la position fermée pour fixer la capsule (50) dans une configuration d'extraction ;
- extraire la capsule (50) pour former la boisson ; et
- actionner la poignée utilisateur (20) pour pivoter la poignée (20) autour de l'axe (21) qui est situé au niveau de la face externe (3) du boîtier (2) entre les première et deuxième positions pour déplacer l'une par rapport à l'autre, généralement le long de l'axe longitudinal (10') selon un angle (γ) par rapport à l'axe linéaire (3') de la face externe (3), les première et deuxième parties (11, 12) dans la position ouverte pour retirer la capsule d'entre les première et deuxième parties (11, 12), par exemple retirer la capsule (50) par gravité.

14. Utilisation d'une capsule (50) en tant que capsule (50) pour :
- une machine telle que définie dans l'une quelconque des revendications 1 à 11,
- l'implémentation d'une combinaison telle que définie dans la revendication 12, ou
- la réalisation d'un procédé tel que défini dans la revendication 13.

15. Machine telle que définie dans l'une quelconque des revendications 1 à 11 ou combinaison telle que définie dans la revendication 12 ou procédé tel que défini dans la revendication 13 ou utilisation telle que définie dans la revendication 14, dans lequel la capsule (50) comprend un corps (51), par exemple un corps généralement linéaire ou effilé, et facultativement un rebord annulaire périphérique circulaire (52), par exemple un rebord flexible ou rigide, s'étendant à partir d'une partie périphérique, par exemple un bord ou une face (53), du corps (51), facultativement la capsule (50) contient un ingrédient d'aromatisation pour la préparation de thé, de café, de chocolat chaud, de chocolat froid, de lait, de soupe ou d'un aliment pour bébés.
